# FASCICULE DE BREVET EUROPEEN

(11) **EP 4 073 908 B1**
(45) Date de publication et mention de la délivrance du brevet: **11.11.2026**
(21) Numéro de dépôt: 20817016.7
(22) Date de dépôt: 07.12.2020
(51) Int. Cl.: H02K 3/52, H02K 5/22, H02K 5/10

(54) **MOTEUR ÉLECTRIQUE COMPRENANT UN BOÎTIER ET UN SURMOULAGE D'UN STATOR ET D'UN ENSEMBLE DE CONNEXION ÉLECTRIQUE**
ELEKTROMOTOR MIT EINEM GEHÄUSE UND EINEM SPRITZGUSSTEIL AUS EINEM STATOR UND EINER VERBINDUNGSLEITERBAUGRUPPE
ELECTRIC MOTOR COMPRISING A HOUSING AND AN OVERMOLD OUT OF A STATOR AND CONNECTING CONDUCTOR ASSEMBLY

(30) Priorité: 10.12.2019 FR 1914080
(43) Date de publication de la demande: 19.10.2022
(73) Titulaire: Sonceboz Mechatronics Boncourt SA, 2926 Boncourt (CH)
(72) Inventeur: MELLERE, Cédric, 25190 SOULCE CERNAY (FR); PLACE, Jean-François, 25310 PIERREFONTAINE-LES-BLAMONT (FR)
(74) Mandataire: IP Trust
(86) Numéro de dépôt international: PCT/EP2020/084913
(87) Numéro de publication internationale: WO 2021/116029

(56) Documents cités:
- WO-A1-97/16883
- CH-A1- 699 082
- DE-A1- 102007 022 070
- FR-A1- 2 996 072
- JP-A- 2010 061 957
- US-A1- 2018 083 516

## Description

### Domaine de l'invention

La présente invention concerne un moteur électrique polyphasé, notamment pour des applications de commande électrique d'organes mécaniques tels que des embrayages dans l'industrie, pour les véhicules automobiles et commerciaux, en substitution des solutions de commandes hydrauliques ou pneumatiques.

Dans le domaine industriel, le choix d'un moteur polyphasé se réalise en fonction de critères qui sont tout autant des critères de coûts, de performances et de durée de vie. Les performances sont évaluées principalement en fonction du rendement et de la fiabilité. Pour réaliser un bon rendement, il est nécessaire de disposer d'un volume de cuivre suffisant afin de limiter les pertes Joule, et d'un circuit magnétique court pour minimiser les pertes fer. Le coût du moteur est lié au coût des matériaux mais aussi au coût de réalisation et il est particulièrement important de proposer une solution économique pour la réalisation du bobinage et l'assemblage du moteur, des sous-ensembles.

Pour l'électrification de commandes jusque-là hydraulique ou pneumatique, il est nécessaire de disposer d'actionneurs puissants, fiables, robustes et compacts.

### Etat de la technique

On connaît dans l'état de la technique le brevet japonais JP2010061957 proposant un moteur équipé d'un connecteur femelle formant le port d'insertion d'un connecteur mâle.

Le boîtier présente une ouverture munie d'une rainure transversale référencée 3B dans laquelle vient s'insérer un talon en saillie référencé (8b) prévue sur un bornier référencé (8). Ce bornier est relié au stator par un câble référencé (10), s'étendant entre le moteur et le bornier. Cette construction ne permet en aucune façon d'assurer le centrage et le calage angulaire du moteur par rapport au boîtier.

On connait aussi le brevet allemand DE102007022070 qui décrit une solution d'un moteur et d'un connecteur fixé au stator comportant des contacts électriques dépassant radialement vers l'extérieur. Ce connecteur peut être encliqueté dans une partie d'un boîtier formé par l'assemblage de plusieurs parties.

Le brevet suisse CH699082B1 décrit un moteur électrique comprenant un carter, un stator fixe par rapport au carter, un rotor monté sur paliers et tournant par rapport au stator et au carter, le stator comprenant un circuit magnétique entourant le rotor et une pluralité de bobines, chacun entourant un bras radial correspondant du circuit magnétique disposé autour du rotor, le moteur comprenant en outre un connecteur pour interconnecter les bobines à une alimentation externe. Le connecteur se présente sous la forme d'un connecteur enfichable avec un connecteur complémentaire d'un système d'alimentation externe.

Les demandes de brevet WO97/16883 A, US2018/083516 A et FR2996072 A décrivent d'autres exemples de réalisation d'un moteur avec un connecteur électrique latéral.

### Inconvénients de l'art antérieur

Les solutions de l'art antérieur ne sont pas totalement adaptées à la production en grande série d'actionneurs et de moteurs de très grande robustesse, avec une précision d'assemblage et une simplicité de fabrication automatisée.

### Solution apportée par l'invention

L'invention se rapporte au domaine des actionneurs électromagnétiques utilisant une structure statorique bobinée multiphasée, notamment triphasée, comportant un capteur de position du rotor. L'invention concerne en particulier la connexion des signaux électriques entre l'ensemble moteur (stator + rotor) et l'interface électrique de l'application.

La présente invention propose de résoudre un ensemble de problématiques résultant de l'opération de connexion électrique entre deux réseaux de connexion (appelés leadframes) multipistes (plusieurs pistes) : l'un appartenant à un stator d'un ensemble moteur et l'autre à l'organe de pilotage (puissance et signal) de l'application.

Les solutions de l'art antérieur présentent en général plusieurs problèmes :
- Difficulté à assurer un positionnement précis du réseau de connexion (« leadframe ») de l'ensemble moteur relativement au réseau de connexion de l'application.
- Difficulté de réaliser et fabriquer des réseaux de connexion de puissances pour des ensembles moteur économiques et robustes.
- Difficulté à transmettre des forts niveaux de puissance électrique (> 1kW) de façon économique et fiable.
- Difficulté de mise en place sur le réseau de connexion puissance de l'ensemble moteur d'éléments annexes tels que les réseaux de signal capteur, une tôle de blindage magnétique éventuelle, un stator équipé de bobines pour une opération de surmoulage de l'assemblage.
- Manque de fiabilité des connexions électriques entre le réseau de connexion puissance et les bobines du stator de l'ensemble moteur.

Plus particulièrement, l'invention concerne des applications où les connexions électriques entre l'ensemble moteur et les organes de pilotage / alimentation ne nécessitent pas de connecteur standard (type intégré ou « pigtail ») mais un réseau de pistes en alliage de cuivre rigides (« leadframes »).

Afin de remédier à ces inconvénients, l'invention concerne selon son acception la plus générale un moteur conforme à la revendication 1 et un procédé de fabrication d'un tel moteur.

### Description détaillée d'un exemple

### non limitatif de réalisation

L'invention sera mieux comprise à la lecture de la description qui suit, faisant référence aux dessins annexés où :

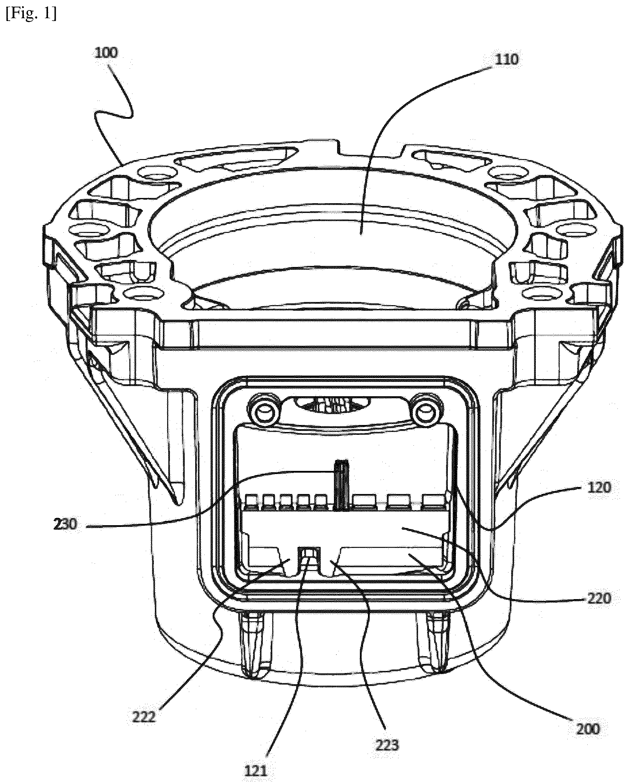

- La figure 1 représente une vue en perspective de trois-quarts dessus du moteur dans son boitier.
- La figure 2 représente une vue en perspective de trois-quarts dessus de l'ensemble moteur (rotor - stator - capteur).
- La figure 3 représente une vue de la découpe en bande du réseau de connexion de puissance, avant cambrage.
- La figure 4 représente une vue en perspective du réseau de connexion après une première étape de mise en forme par cambrage.
- La figure 5 représente une vue en perspective du réseau de connexion après surmoulage, avec les zones d'appui.
- La figure 6 représente un schéma électrique du stator réalisé par le réseau de connexion puissance et des bobines.
- La figure 7a représente une vue en perspective et en coupe partielle du stator équipé du réseau de connexion puissance et du réseau de connexion signal en version simple capteur.
- La figure 7b représente une vue en perspective et coupe partielle du stator équipé du réseau de connexion puissance et du réseau de connexion signal en version double capteur.
- La figure 8 représente une vue éclatée du stator pour l'assemblage et la mise en position du réseau de connexion puissance, du blindage et du réseau de connexion signal.
- La figure 9a représente une vue en perspective du stator avant surmoulage.
- La figure 9b représente une vue en perspective du stator après surmoulage.
- La figure 10 représente une vue en perspective de trois-quarts dessous du moteur avec les caractéristiques mécaniques spécifiques sous forme de code matriciel.
- La figure 11 représente une vue en perspective de trois-quarts dessus et coupe partielle du moteur et des guidages du rotor.

### Contexte de l'invention

Afin de répondre à l'objectif de robustesse et de prise en compte des contraintes de production industrielle automatisée, l'invention se traduit de façon générale par un moteur conçu pour permettre un assemblage mécanique et électrique simplifié de trois sous-ensembles, à savoir un rotor, un bloc statorique munie de la connectique et un boîtier, le bloc statorique et le boîtier formant chacun un bloc rigide d'un seul morceau, sans pièces mobiles susceptibles de perturber l'assemblage.

Le bloc statorique et le boîtier sont conçus pour être complémentaires par un assemblage simple assurant le positionnement omnidirectionnel et notamment angulaire et le calage mécanique après engagement du bloc statorique dans le boîtier. Le rotor est conçu pour permettre une insertion axiale dans le bloc statorique.

Pour conférer une configuration de « bloc d'un seul morceau » au stator, la partie haute au moins du stator, la connectique et les circuits imprimés portant les sondes de détection magnétiques sont englobés dans une résine recouvrant l'ensemble de ces éléments de façon à les lier de manière indissociable avec les tôles statoriques.

### Détail de réalisation du bloc statorique

L'ensemble moteur comporte un rotor positionné dans la cavité longitudinale d'un bloc statorique formé par un boitier (100) monolithique, avec un corps tubulaire fermé par un fond et ouvert à son extrémité opposée, pour présenter la forme générale d'un pot. Ce boîtier (100) est formé d'une seule pièce, moulée de préférence, pour former une enveloppe de la partie électromécanique assurant la protection mécanique, électrique et son étanchéité, et présentant des organes de fixations sur un équipement complémentaire.

La partie supérieure du boîtier (100) présente une ouverture axiale (110) pour l'introduction et la mise en place du stator (200) surmoulé et une ouverture radiale (120) pour réaliser la connexion électrique avec le connecteur extérieur relié à un câble multiconducteurs assurant l'alimentation électrique et la transmission bidirectionnelle des signaux de services (commande, asservissement, position ...).

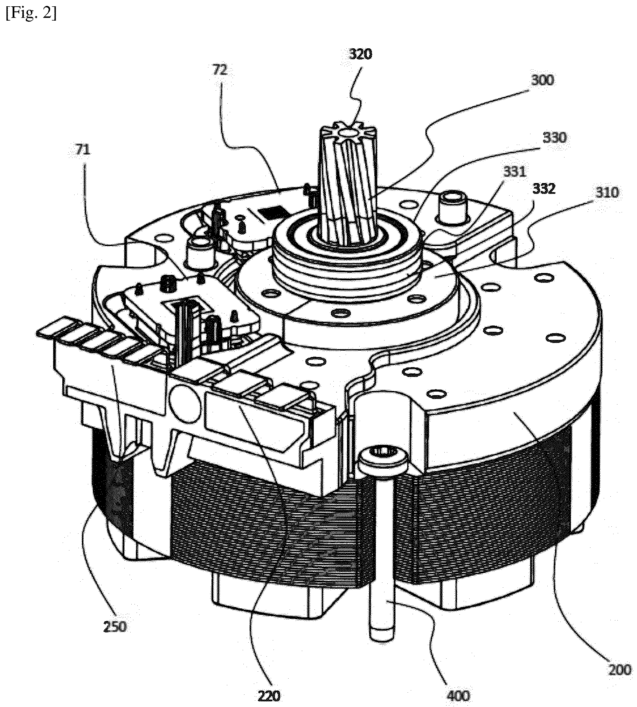

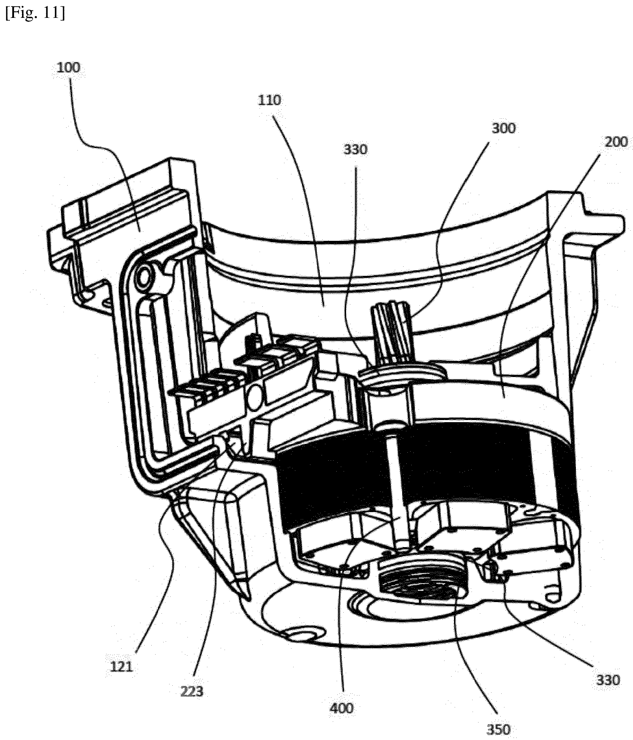

Le stator (200) est équipé d'un paquet de tôles statorique d'un réseau de connexion électrique, et de deux circuits imprimés (71, 72) équipés de sondes de hall, éventuellement une tôle de blindage, le réseau de connexion électrique (220) et les circuits imprimés (71, 72) équipés de sondes de hall et d'un connecteur électrique (250) tous ces éléments étant surmoulés avec une résine isolante électriquement, en englobant au moins partiellement la partie supérieure du paquet de tôles, pour former un bloc rigide en encapsulé. Le stator (200) surmoulé est fixé mécaniquement audit boitier (100) par un ajustement serré (chassage en force ou frettage) et des vis de fixation (400), visibles en figure 2 et 11. Le stator (200) surmoulé forme un bloc rigide sans pièces mobiles destiné à être logé dans le boîtier (100) et à recevoir le rotor. Le stator est rigidement lié à la connectique à l'aide d'un surmoulage, sans liaison par un câble souple.

Le bord de la fenêtre (120) présente un index protubérant (121) s'étendant axialement, les bords supérieurs de l'index (121) étant biseautés.

Le surmoulage de la zone de connexion (220) du stator présente une cavité complémentaire à l'index (121), définie par deux épaulements (222, 223) formant une fourche s'engageant sur l'index (121) lorsque le stator surmoulé est déplacé axialement vers le fond du boîtier (100).

L'index (121) du boîtier forme avec les épaulement complémentaires (222, 223) un moyen de calage angulaire assurant le positionnement précis et robuste du stator (200) surmoulé par rapport au boîtier (100).

Le surmoulage de la partie supérieure du stator et notamment de la zone de connexion (220) du stator présente en outre un index (230) s'étendant perpendiculairement à la section transversale. Cet index (230) sert à assurer le positionnement du connecteur complémentaire venant s'engager dans le boîtier (100) par un déplacement vertical.

La fenêtre (120) du boîtier permet de réaliser le raccordement des pistes conductrices du réseau (« leadframe ») avec les conducteurs du connecteur complémentaire, par exemple par soudure, avant d'être refermée par une plaque de protection assurant la fermeture et l'étanchéité.

La figure 2 représente le stator (200) surmoulé. La partie surmoulée inclue un premier réseau de connexion puissance (220) et, dans l'exemple décrit, un deuxième réseau de connexion signal (250) recevant deux circuits imprimés (71, 72) équipés de sondes de hall pour la détection de la position angulaire du rotor (300). Les sondes de hall détectent le champ magnétique émis par un aimant capteur (310) solidaire de l'axe (320) du rotor (300), l'axe étant porté et guidé en rotation par des roulements (330) équipés de joints déformables élastiquement (331, 332) localisés sur la bague extérieure du roulement.

Afin de limiter les vibrations et déplacements subis par le rotor (300) en fonctionnement, une rondelle de précontrainte (350) est insérée entre le roulement (330) et le boitier (100). Cette rondelle élastique (350) applique une précharge axiale F avec une raideur axiale K sur le rotor (300), la force F et la raideur K étant dimensionnés et choisis en fonction de la masse du rotor (300) et des perturbations vibratoires extérieures.

### Réalisation des réseaux de connexion

Bien que l'invention ne soit pas limitée à la variante décrite ci-dessous, le réseau de connexion pouvant être réalisé de différentes manières, par exemple comme proposé dans le brevet français FR2996072 ou FR2923951, la présente invention propose une solution nouvelle de réseau de connexion des bobines.

Cette solution n'est pas limitée à une réalisation d'un moteur prévoyant l'indexation du stator par rapport au boîtier, et peut être appliquée à tout type de stator de moteur électrique multiphasé.

Le stator comprend deux réseaux de connexions, l'un de puissance pour les liaisons entre les pistes (20, 30, 40) du connecteur électrique d'alimentation des phases, et l'autre pour la liaison avec les sondes magnétosensibles.

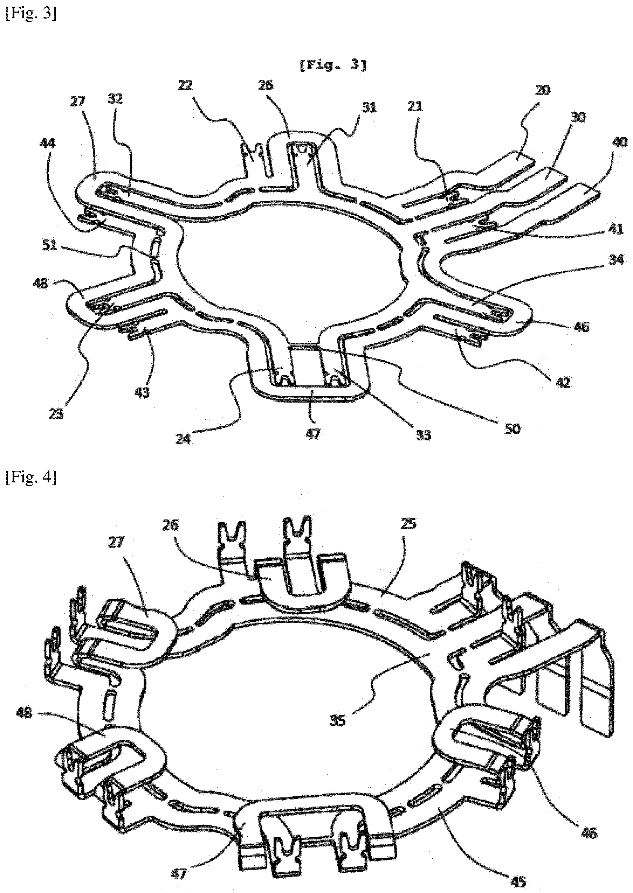

Comme visible en figures 3 et 4, le réseau de connexion triphasé est découpé dans une feuille de matériau conducteur, par exemple du cuivre, dont l'épaisseur est déterminée en fonction du courant requis pour l'alimentation des bobines électriques du stator.

Pour assurer l'intégrité des pistes après découpe, par exemple par estampage ou découpe laser ou jet d'eau, les pistes conductrices réalisant avec les bobines les trois phases du moteur, qui doivent normalement être indépendantes et isolées électriquement, sont provisoirement maintenues par des pontets (50, 51) qui seront ensuite découpés une fois l'opération de surmoulage du réseau de connexion effectué (le réseau de connexion pouvant comporter plus de 2 pontets).

Chaque phase est associée à un conducteur terminé par une patte de raccordement respectivement (20, 30, 40), et présentant des segments semi-annulaires (25, 35, 45) et quatre pattes de liaison respectivement (21 à 24, 31 à 34 et 41 à 44) pour la soudure ou le couplage par « press-fit » avec les fils des bobines électriques.

Le conducteur pour la première phase, correspondant à la patte de raccordement (20), se présente sous la forme d'une première patte de liaison (21) avec un des fils de la bobine correspondant, s'étendant entre les pattes de raccordement (20, 30) de la première et seconde phase, et d'un anneau partiel (25) s'étendant sur environ 240°, jusqu'à une quatrième patte de liaison (24). Il comprend une deuxième (22) et troisième (23) patte de liaison avec les fils des bobines correspondantes.

Cet anneau partiel (25) présente des excroissances radiales (26, 27) sous forme de boucles contournant les pattes de liaison (31, 32) du deuxième conducteur.

Le troisième conducteur se terminant par la patte de connexion (40) présente une configuration sensiblement miroir par rapport au premier conducteur. Il présente une patte de liaison (41) située entre la deuxième patte (30) et la troisième patte (40), et est prolongé par un anneau partiel (45) s'étendant sur 240° jusqu'à une quatrième patte de liaison (44). Il comprend une deuxième (42) et troisième (43) patte de liaison avec les fils des bobines correspondantes.

Cet anneau partiel (45) présente des excroissances radiales (46, 47, 48) sous forme de boucles contournant les pattes de liaison (34, 24 et 33, 23) des deuxième et troisième conducteurs.

Le conducteur central correspondant à la deuxième phase et terminé par la patte de raccordement (30) présente un segment annulaire intérieur (35) avec des pattes de liaison (31, 32, 33, 34) s'étendant à l'intérieur des excroissances (26, 27, 46, 47).

Cette configuration est réalisée par une découpe (étampage) lors d'une seule opération dans une seule et même bande de métal des 3 phases.

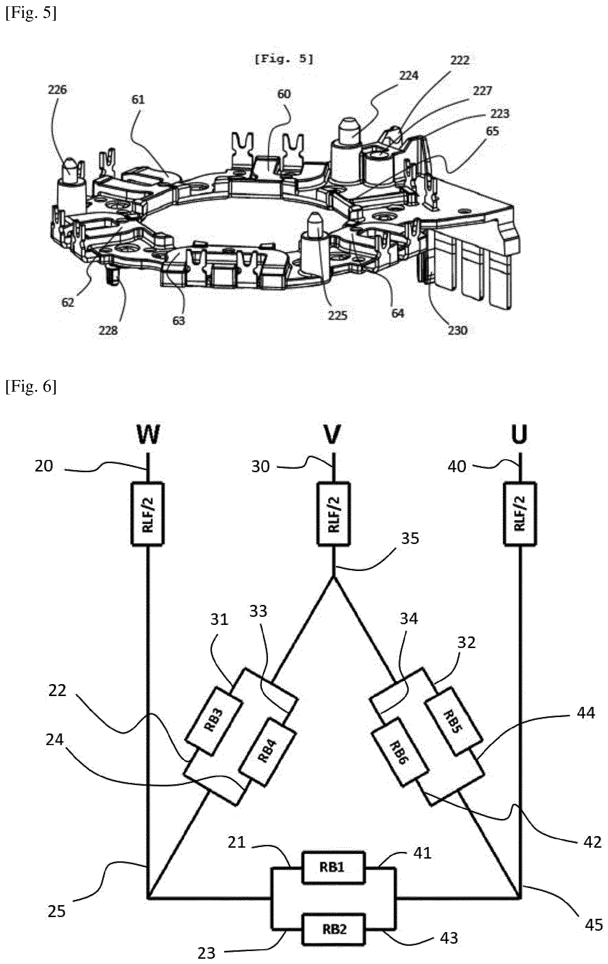

Lors de cette première étape de fabrication, une feuille de matériau conducteur est découpée pour présenter une configuration correspondant à la topologie électrique recherchée pour la connexion des bobines du stator. Un mode préférentiel de réalisation est présenté sur le schéma de la figure 6 avec une connectique de type « delta parallèle » (RB1 à RB6 symbolisant les bobines du stator). D'autres modes de réalisation préférentiels selon l'invention tels que « delta série », « étoile parallèle », « étoile série » sont également possibles. Plus généralement, les caractéristiques suivantes pour un moteur triphasé à 2.N bobines (6 bobines par exemple) sont préférées:
- Trois pistes de largeur généralement constante, à ±10% près, la largeur et l'épaisseur étant définies en fonction de la puissance électrique nécessaire.
- Chacune des pistes présente une extrémité formant une patte de raccordement (20, 30, 40), s'étendant vers une zone de connexion.
- Les première et troisième pistes présentent une alternance de segments annulaires et d'excroissances radiales, et s'étendant sur un arc d'environ 240°.
- La deuxième piste présente une alternance de segments annulaires et de pattes de liaison venant se positionner dans l'espace creux délimité par les excroissances radiales des première et troisième pistes.
- Chacune des pistes présente une ou plusieurs pattes de liaison avec un fil d'une bobine électrique, les pattes s'étendant dans des directions centrifuges.
- Les trois pistes sont reliées provisoirement par des pontets sécables.

L'étape suivante, illustrée par la figure 4, consiste à replier par une ou plusieurs opérations successives de cambrage les excroissances radiales et les pattes de liaison. Afin d'obtenir les 2.N interfaces électriques avec les bobines sur la périphérie extérieure du réseau de connexion, les pattes de liaison (21 à 24, 31 à 34, 41 à 44) sont pliées pour être amenées en position axiale selon un angle d'environ 90° par rapport au plan défini par la bande découpée à l'étape précédente. Cette étape de pliage simple permet une bonne maitrise de la mise en position des pattes de liaison pour la connexion avec les fils de bobine. Les excroissances radiales (26, 27, 46, 47, 48) sont ensuite pliées à environ 180° vers l'intérieur (ou l'extérieur) pour être ainsi rabattues sous et dans la surface projetée du réseau de connexion de puissance, ce qui évite d'augmenter l'encombrement. Ce pliage à 180° induit une augmentation locale de l'épaisseur du réseau de connexion qui est exploitée pour la gestion des appuis (60 à 65), visibles en figure 5, destinés à venir sur les corps de bobine lors de l'opération de soudage électrique : ces appuis apportent une meilleure rigidité en compression et évite les volumes/épaisseurs de plastique trop importants dans les zones fonctionnelles des appuis (retassures, retraits, cotes peu précises). Lors du surmoulage, le plastique est injecté dans les volumes définis entre les excroissances recourbées et les pistes pour former des zones de calage des bobines, comme représenté en figure 5.

Par ailleurs, les pattes de raccordement (20, 30, 40) sont, dans l'exemple décrit, repliées à 90° vers le bas, alors que les pattes de liaison avec les fils des bobines sont repliées à 90° dans la direction opposée, vers le haut.

Les excroissances radiales (26, 27, 46, 47, 48), nécessitant un pliage plus complexe et donc par définition moins précis, ne comportent aucun élément de connexion telles que des pattes de liaison ou des pattes de raccordement. Ainsi, lors de l'opération de pliage des excroissances, la précision de positionnement des pattes, pliées à 90°, n'est pas réduite par effet de déformation.

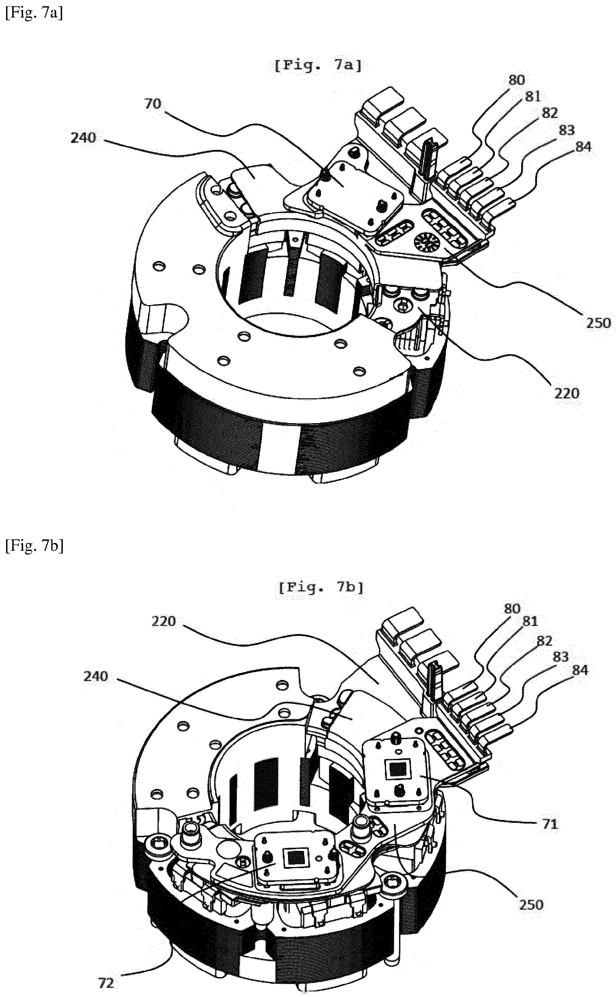

Les figures 7a et 7b représentent une vue du stator (200) dont la partie supérieure au moins est surmoulée. Cette partie supérieure du rotor inclue le deuxième réseau de connexion de type « signal » (250) constitué d'un ensemble de pistes surmoulées et intégrant un circuit imprimé (70, 71, 72) sur lequel sont soudées les sondes de Hall, le circuit imprimé étant rapporté et connecté par pressfit sur le deuxième réseau de connexion. Le deuxième réseau de connexion signal présente en outre des pattes de raccordement (80 à 84) disposées à proximité des pattes de raccordement (20, 30, 40) du premier réseau de connexion puissance (220).

La figure 7a est un premier mode de réalisation préférentiel où le deuxième réseau de connexion signal (250) reçoit un seul circuit imprimé (70). La figure 7b est un deuxième mode de réalisation préférentiel où le deuxième réseau de connexion signal (250) reçoit deux circuits imprimés (71, 72), afin d'apporter par exemple une redondance ou une meilleure précision à la mesure de la position angulaire.

Une tôle de blindage (240) est disposée axialement entre le deuxième réseau de connexion de signal surmoulé (250) et le premier réseau de connexion de puissance surmoulé (220), pour limiter les perturbations des sondes par les flux électromagnétiques générés par le stator. Cette tôle de blindage (240) présente une forme semi-annulaire couvrant intégralement la surface projetée sous les circuits imprimés (70, 71, 72).

### Réalisation du stator surmoulé

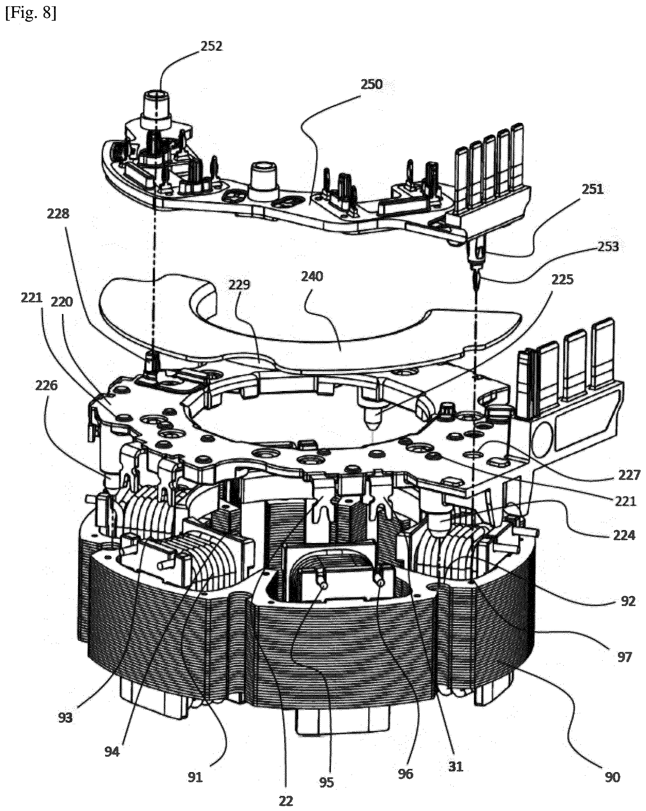

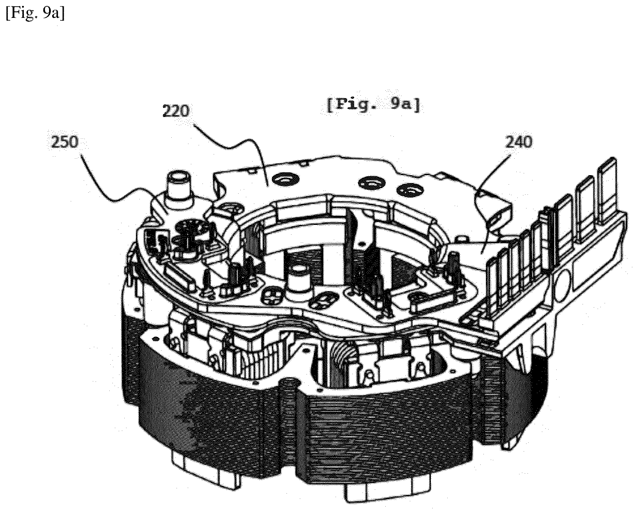

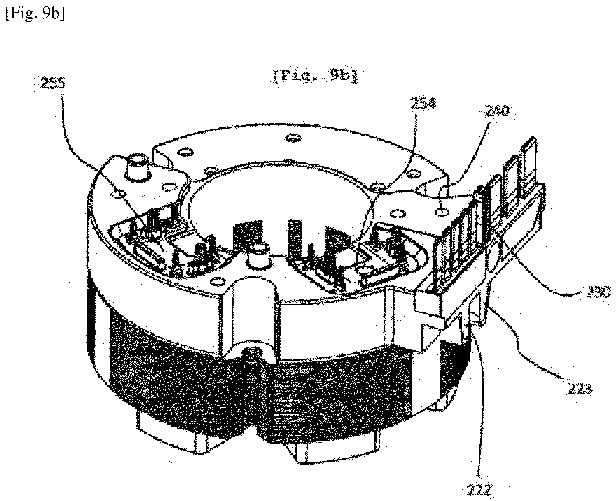

Les différentes étapes de réalisation du stator (200) surmoulé sont représentées en figure 8, 9a et 9b. Un circuit fer (90) réalisé par un empilement de tôles découpées intègre des bobines (91). Le réseau de connexion de puissance surmoulé (220) est mis en position sur le circuit fer (90) par un ensemble de pions de centrage (224, 225, 226) engageant et collaborant avec une pluralité de formes complémentaires (92) du circuit fer, ces formes complémentaires (92) étant aptes à recevoir également des vis de fixation (400) pour le maintien du stator (200) dans le boitier (100). L'arrêt axial du réseau de connexion de puissance surmoulé (220) est assuré par la mise en contact des appuis (60 à 65), non visibles ici, sur les faces supérieures (93, 94) des corps de bobines (91). On obtient ainsi une mise en position précise, simple et robuste des pattes de liaisons (22, 31) par rapport aux fils (95, 96) de bobine pour en réaliser la connexion électrique, par exemple par soudage.

Le stator (200) surmoulé comporte également un deuxième réseau de connexion signal (250) inclue dans le surmoulage et mis en position sur le premier réseau de connexion puissance (220) par un ensemble de pions et trous de centrage (251, 252) engageant et collaborant avec des formes complémentaires (227, 228). Le pion de centrage (251) du deuxième réseau de connexion signal (250) intègre en outre un élément de connectique électrique (253), par exemple et non-limitativement de type pressfit, cet élément de connectique (253) étant électriquement relié à une des pattes de raccordement (80 à 84), cet élément de connectique étant apte à être électriquement relié au circuit fer (90) en engageant, par exemple et non limitativement un trou (97). Cette solution de connexion électrique, particulièrement astucieuse, entre une des pattes de raccordement (80 à 84) du deuxième réseau de connexion signal surmoulé (250) et le circuit fer (90) du stator (200) surmoulé permet de mettre à la masse électrique le stator (200) et le boitier (100) avec le connecteur extérieur relié à un câble multiconducteurs assurant l'alimentation électrique et la transmission bidirectionnelle des signaux de services (commande, asservissement, position,...) et de garantir ainsi une bonne immunité aux perturbations et émissions électromagnétiques environnantes.

Le stator (200) surmoulé inclue enfin dans le surmoulage une tôle de blindage (240), intercalée entre le premier réseau de connexion puissance surmoulé (220) et le deuxième réseau de connexion signal surmoulé (250). Cette tôle de blindage (240) en matière ferromagnétique, qui permet de séparer et d'immuniser les sondes de hall intégrées sur les circuits imprimés (70, 71, 72) des bobines du stator, est portée par le réseau de connexion puissance (220) au moyen d'un système de godrons (ou « crush ribs ») définissant deux lignes d'actions orientées radialement par rapport au stator. La tôle est ajustée via une collerette axiale (229) en contact sur des zones plastiques du diamètre intérieur du surmoulage du réseau de connexion puissance et elle est arrêtée axialement via une pluralité de bossages (221). La tôle de blindage (240) est localement visible après surmoulage du stator pour pouvoir contrôler sa présence.

Une fois le stator équipé du premier réseau de connexion puissance (220), de la tôle de blindage (240) et du deuxième réseau de connexion signal (250), il est surmoulé d'une résine électriquement isolante. On obtient ainsi un stator (200) surmoulé robuste et massif où seules les interfaces de mise en position et connexion électrique (254, 255) avec les circuits imprimés (71, 72), les pattes de raccordement (20, 30, 40, 80 à 84), l'index (230), la cavité complémentaire et les deux épaulements (222, 223) et une partie de la tôle de blindage (240) sont visibles et accessibles.

### Assemblage du stator surmoulé dans le boîtier

La section intérieure du boîtier (100) est déterminée pour assurer un calage sans jeu du stator surmoulé.

Pour l'assemblage, on procède à une étape de chauffage dudit boîtier (100) avant l'introduction axiale du stator, et le cas échéant de repositionnement angulaire pour l'engagement mutuel des moyens de calage.

### Indexation du stator par rapport au boîtier

Le stator (200) surmoulé est centré dans le boitier (100) par le diamètre extérieur de son circuit fer (90).

Le stator (200) surmoulé est arrêté axialement sur une surface de référence du boitier par son circuit fer (90).

Le stator surmoulé (et donc les interfaces électriques de puissance et de signal pour la connexion avec l'application) est angulairement orienté par les épaulements appartenant au réseau de connexion puissance (222, 223).

Le réseau de connexion correspondant de l'interface électrique de l'application peut alors être orienté et positionné directement par le boitier en forme de cloche (via des usinages précis collaborant avec des éléments de guidage du réseau de connexion de l'application). Alternativement, le réseau de connexion puissance surmoulé peut comporter un deuxième élément d'indexation angulaire (230) sous la forme d'un plot plastique ajusté (côté opposé au circuit fer du stator) pouvant être engagé par une forme correspondante du réseau de connexion de l'application et ainsi garantir un positionnement précis et robuste entre les interfaces électriques de l'ensemble moteur et les interfaces électriques de l'application, en s'affranchissant intégralement des dimensions et tolérances liées à la fabrication du boitier (100).

### Personnalisation du moteur

Afin d'adapter de manière optimale le contrôleur du moteur aux spécificités de fabrication et d'assemblage de chaque moteur, une variante particulière de l'invention, non limitée aux modes de réalisation précédemment décrits, consiste à enregistrer, à l'issue de la construction du moteur, un ensemble de caractéristiques électromécaniques spécifiques au moteur considéré, et à enregistrer pour chaque moteur les caractéristiques spécifiques sous forme d'un code matriciel apposé sur le boîtier du moteur, ou sous forme d'un enregistrement numérique dans une mémoire informatique.

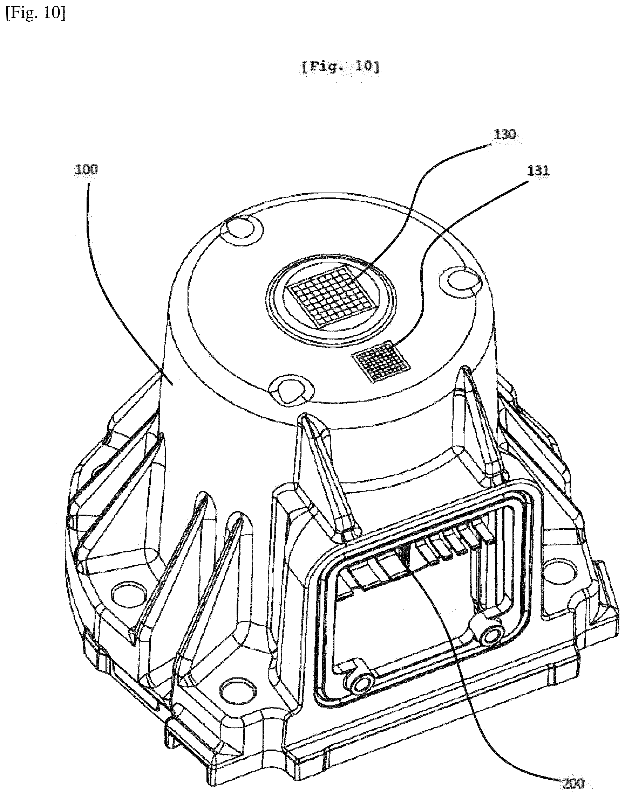

La figure 10 présente, selon l'invention, un boitier (100) équipé d'un stator (200) surmoulé. La face arrière du boitier (100) comporte un code matriciel (130, 131) de type DMC (Data Matrix Code), QR Code (Quick Response Code), code à barres. Ce code matriciel peut être disposé sur une ou plusieurs zones de la face du boitier, il peut être imprimé par jet d'encre, gravé par un laser ou par une machine à micro-percussion, ou encore collé via une étiquette.

Ces données numériques sont destinées à être lues par le circuit de pilotage qui commandera le moteur lors de son intégration dans un système, et à paramétrer la loi de commande du circuit de pilotage en prenant en compte les spécificités du moteur commandé.

## Revendications

1. - Moteur comprenant un boîtier (100) présentant un logement cylindrique pour recevoir et centrer un stator (200) bobiné cylindrique, ledit stator (200) présentant un ensemble de connexion électrique (220) avec des pattes de connexion (20,30,40,80-84) s'étendant transversalement, le boîtier (100) présentant une protubérance latérale pour la connexion avec un ensemble de connexion (220) complémentaire **caractérisé en ce que** :
a) ledit stator (200), équipé dudit ensemble de connexion électrique (220), est surmoulé avec une résine électriquement isolante pour former un bloc rigide sans pièces mobiles destiné à être logé dans ledit boîtier (100) et à recevoir un rotor (300), ledit stator (200) étant rigidement lié à la connectique à l'aide d'un surmoulage, sans liaison par un câble souple, **en ce que**
b) ledit boitier (100) est formé d'une seule pièce, avec un corps tubulaire fermé par un fond et ouvert à son extrémité opposée, la partie supérieure dudit boîtier (100) présentant une ouverture axiale (110) pour l'introduction et la mise en place du stator (200) surmoulé et une ouverture radiale (120) pour réaliser la connexion électrique avec un connecteur extérieur et **en ce que**
c) ledit boîtier (100) présente dans un bord de son ouverture radiale (120) un premier moyen de calage angulaire (121) complémentaire d'un second moyen de calage angulaire (222, 223) prévu à la partie arrière dudit ensemble de connexion électrique surmoulé (220).

2. - Moteur selon la revendication 1 **caractérisé en ce que** l'un au moins des moyens de calage angulaire (121, 222, 223) présente un chanfrein pour rattraper le jeu angulaire.

3. - Moteur selon la revendication 1 **caractérisé en ce que** lesdits moyens de calage (121, 222, 223) angulaire sont orientés et s'engagent selon une direction parallèle à l'axe du logement cylindrique dudit boîtier (100).

4. - Moteur selon la revendication 1 **caractérisé en ce que** ledit ensemble de connexion électrique surmoulé présente en outre à sa surface transversale avant un moyen de mise en position (230) complémentaire d'un moyen de calage prévu à la surface arrière d'un sous-ensemble de connexion complémentaire (busbar).

5. - Moteur selon la revendication 1 **caractérisé en ce que** ledit ensemble de connexion électrique surmoulé comprend une feuille conductrice découpée pour former N pistes (20, 30, 40) reliées par des pontets sécables (50, 51) et présentant des excroissances radiales recourbées de 180° dans un plan parallèle au plan principal desdites pistes (20, 30, 40), lesdites pistes présentant des prolongements latéraux dépassant du surmoulage.

6. - Moteur selon la revendication 1 **caractérisé en ce que** ledit ensemble de connexion électrique surmoulé présente en partie avant un deuxième sous-ensemble (250) de pistes pour la connexion d'au moins un circuit imprimé supportant un capteur électromagnétique, une tôle de blindage (240) étant interposée entre ledit deuxième sous-ensemble de pistes (250) et ledit ensemble de connexion électrique surmoulé (220).

7. - Moteur selon la revendication 1 **caractérisé en ce qu'**il comporte un moyen d'enregistrement d'une information numérique correspondant à des paramètres de calibration du capteur spécifiques au moteur, lesdits moyens d'enregistrement étant apte à être exploités par le calculateur d'un circuit de pilotage complémentaire paramétrable.

8. - Moteur selon la revendication précédente **caractérisé en ce que** ledit moyen est un code graphique ou un enregistrement numérique dans une mémoire électronique.

9. - Moteur selon la revendication 1 **caractérisé en ce qu'**il comporte une zone d'enregistrement d'une information numérique correspondant à des paramètres spécifiques au moteur.

10. - Moteur selon la revendication 1 **caractérisé en ce qu'**il comporte au moins une rondelle de précontrainte (350) dont le niveau de précharge est déterminé pour limiter les vibrations du rotor (300).

11. - Moteur selon la revendication 1 **caractérisé en ce qu'**il comporte au moins un roulement présentant au moins un joint (331, 332) déformable élastiquement, et **en ce que** ledit joint est intégré entre la bague extérieure dudit roulement et son logement.

12. - Procédé de fabrication d'un moteur selon la revendication 1 **caractérisé en ce que** l'on procède à une étape de chauffage dudit boîtier (100) avant l'introduction axiale dudit stator (200) surmoulé, et le cas échéant de repositionnement angulaire pour l'engagement mutuel desdits moyens de calage (121,222,223)

## Patentansprüche

1. Motor, umfassend ein Gehäuse (100), das eine zylindrische Aufnahme zum Empfangen und Zentrieren eines zylindrischen gewickelten Stators (200) aufweist, wobei der Stator (200) eine elektrische Anschlussanordnung (220) mit sich quer erstreckenden Anschlussfahnen (20,30,40,80-84) aufweist, wobei das Gehäuse (100) einen seitlichen Vorsprung für den Anschluss an eine komplementäre Anschlussanordnung (220) aufweist, **dadurch gekennzeichnet, dass**:
a) der Stator (200), der mit der elektrischen Anschlussanordnung (220) ausgestattet ist, mit einem elektrisch isolierenden Harz zum Ausbilden eines starren Blocks ohne bewegbare Stücke umspritzt ist, der dazu bestimmt ist, in dem Gehäuse (100) aufgenommen zu werden und einen Rotor (300) zu empfangen, wobei der Stator (200) mithilfe einer Umspritzung starr mit der Anschlusstechnik verbunden ist, ohne Verbindung durch ein flexibles Kabel, **dadurch, dass**
b) das Gehäuse (100) einstückig ausgebildet ist, mit einem rohrförmigen Körper, der durch einen Boden verschlossen und an seinem gegenüberliegenden Ende offen ist, wobei der obere Teil des Gehäuses (100) eine axiale Öffnung (110) zum Einführen und Platzieren des umspritzten Stators (200) und eine radiale Öffnung (120) zum Herstellen des elektrischen Anschlusses an einen äußeren Anschlussstecker aufweist, und **dadurch, dass**
c) das Gehäuse (100) in einem Rand seiner radialen Öffnung (120) ein erstes Winkelverkeilungsmittel (121) aufweist, das komplementär zu einem zweiten Winkelverkeilungsmittel (222, 223) ist, das an dem hinteren Teil der umspritzten elektrischen Anschlussanordnung (220) vorgesehen ist.

2. Motor nach Anspruch 1, **dadurch gekennzeichnet, dass** mindestens eines der Winkelverkeilungsmittel (121, 222, 223) eine Fase zum Beseitigen des Winkelspiels aufweist.

3. Motor nach Anspruch 1, **dadurch gekennzeichnet, dass** die Winkelverkeilungsmittel (121, 222, 223) in einer Richtung parallel zu der Achse der zylindrischen Aufnahme des Gehäuses (100) ausgerichtet sind und eingreifen.

4. Motor nach Anspruch 1, **dadurch gekennzeichnet, dass** die umspritzte elektrische Anschlussanordnung ferner an ihrer vorderen Queroberfläche ein Positionierungsmittel (230) aufweist, das komplementär zu einem Verkeilungsmittel ist, das an der hinteren Oberfläche einer komplementären Anschlussunteranordnung (Busbar) vorgesehen ist.

5. Motor nach Anspruch 1, **dadurch gekennzeichnet, dass** die umspritzte elektrische Anschlussanordnung eine leitfähige Folie umfasst, die zum Ausbilden von N Leiterbahnen (20, 30, 40) zugeschnitten ist, die durch durchtrennbare Brücken (50, 51) verbunden sind und radiale Auswüchse aufweisen, die in einer Ebene parallel zu der Hauptebene der Leiterbahnen (20, 30, 40) um 180° umgebogen sind, wobei die Leiterbahnen seitliche Verlängerungen aufweisen, die über die Umspritzung hinausragen.

6. Motor nach Anspruch 1, **dadurch gekennzeichnet, dass** die umspritzte elektrische Anschlussanordnung in dem vorderen Teil eine zweite Unteranordnung (250) von Leiterbahnen für den Anschluss von mindestens einer Leiterplatte aufweist, die einen elektromagnetischen Sensor trägt, wobei ein Abschirmblech (240) zwischen der zweiten Unteranordnung von Leiterbahnen (250) und der umspritzten elektrischen Anschlussanordnung (220) eingefügt ist.

7. Motor nach Anspruch 1, **dadurch gekennzeichnet, dass** er ein Aufzeichnungsmittel für eine digitale Information vorweist, die spezifischen Sensorkalibrierungsparametern des Motors entspricht, wobei die Aufzeichnungsmittel geeignet sind, durch den Rechner einer parametrierbaren komplementären Steuerschaltung ausgewertet zu werden.

8. Motor nach dem vorstehenden Anspruch,
**dadurch gekennzeichnet, dass** das Mittel ein grafischer Code oder eine digitale Aufzeichnung in einem elektronischen Speicher ist.

9. Motor nach Anspruch 1, **dadurch gekennzeichnet, dass** er einen Aufzeichnungsbereich für eine digitale Information vorweist, die spezifischen Parametern des Motors entspricht.

10. Motor nach Anspruch 1, **dadurch gekennzeichnet, dass** er mindestens eine Vorspannscheibe (350) vorweist, deren Vorspannungsniveau zum Begrenzen der Vibrationen des Rotors (300) bestimmt ist.

11. Motor nach Anspruch 1, **dadurch gekennzeichnet, dass** er mindestens ein Lager vorweist, das mindestens eine elastisch verformbare Dichtung (331, 332) aufweist, und **dass** die Dichtung zwischen dem Außenring des Lagers und seiner Aufnahme integriert ist.

12. Verfahren zum Fertigen eines Motors nach Anspruch 1,
**dadurch gekennzeichnet, dass** ein Schritt zum Erwärmen des Gehäuses (100) vor der axialen Einführung des umspritzten Stators (200) und gegebenenfalls der Winkelneupositionierung für den gegenseitigen Eingriff der Verkeilungsmittel (121, 222, 223) vorgenommen wird.

## Claims

1. Motor comprising a housing (100) having a cylindrical recess for receiving and centering a cylindrical wound stator (200), said stator (200) having an electrical connection assembly (220) with connection tabs (20, 30, 40, 80-84) extending transversely, the housing (100) having a lateral protuberance for connection to a complementary connection assembly (220),
**characterized in that**:
a) said stator (200), equipped with said electrical connection assembly (220), is overmolded with an electrically insulating resin to form a rigid block with no moving parts, designed to be housed within said housing (100) and to receive a rotor (300), said stator (200) being rigidly bonded to the connectors by means of overmolding, without any connection via a flexible cable, **in that**
b) said housing (100) is formed as a single piece, with a tubular body closed at one end and open at the opposite end, the upper part of said housing (100) having an axial opening (110) for inserting and positioning the overmolded stator (200) and a radial opening (120) for establishing the electrical connection to an external connector, **and in that**
c) said housing (100) has, at one edge of its radial opening (120), a first angular wedging means (121) that is complementary to a second angular wedging means (222, 223) provided at the rear of said overmolded electrical connection assembly (220).

2. Motor according to claim 1, **characterized in that** at least one of the angular wedging means (121, 222, 223) has a chamfer to compensate for angular play.

3. Motor according to claim 1, **characterized in that** said angular wedging means (121, 222, 223) are oriented and engage in a direction parallel to the axis of the cylindrical recess of said housing (100).

4. Motor according to claim 1, **characterized in that** said overmolded electrical connection assembly further has, on its front transverse surface, a positioning means (230) complementary to a wedging means provided on the rear surface of a complementary connection subassembly (busbar).

5. Motor according to claim 1, **characterized in that** said overmolded electrical connection assembly comprises a conductive sheet cut to form N tracks (20, 30, 40) connected by breakable bridges (50, 51) and having radial protrusions curved at 180° in a plane parallel to the main plane of said tracks (20, 30, 40), said tracks having lateral extensions projecting from the overmolding.

6. Motor according to claim 1, **characterized in that** said overmolded electrical connection assembly has, in the front part, a second track subassembly (250) for connecting at least one printed circuit board supporting an electromagnetic sensor, a shielding plate (240) being interposed between said second track subassembly (250) and said overmolded electrical connection assembly (220).

7. Motor according to claim 1, **characterized in that** it comprises means for recording digital information corresponding to calibration parameters of the sensor specific to the motor, said recording means being able to be used by the computer of a configurable complementary control circuit.

8. Motor according to the preceding claim, **characterized in that** said means is a graphic code or a digital recording in an electronic memory.

9. Motor according to claim 1, **characterized in that** it comprises a zone for recording digital information corresponding to parameters specific to the motor.

10. Motor according to claim 1, **characterized in that** it comprises at least one prestress washer (350), the preload level of which is determined to limit the vibrations of the rotor (300).

11. Motor according to claim 1, **characterized in that** it comprises at least one bearing having at least one elastically deformable seal (331, 332), **and in that** said seal is integrated between the outer ring of said bearing and its recess.

12. Method of manufacturing a motor according to claim 1, **characterized in that** a step of heating said housing (100) is carried out before the axial insertion of said overmolded stator (200), and, if necessary, angular repositioning is carried out for the mutual engagement of said wedging means (121, 222, 223).
